(19) Europäisches Patentamt
European Patent Office
Office européen des brevets

(11) **EP 2 714 751 B1**

(12) **EUROPÄISCHE PATENTSCHRIFT**

(45) Veröffentlichungstag und Bekanntmachung des Hinweises auf die Patenterteilung:
**03.06.2015 Patentblatt 2015/23**

(21) Anmeldenummer: **12719335.7**

(22) Anmeldetag: **27.04.2012**

(51) Int Cl.:
***C08F 2/30*** (2006.01)

(86) Internationale Anmeldenummer:
**PCT/EP2012/057775**

(87) Internationale Veröffentlichungsnummer:
**WO 2012/159848 (29.11.2012 Gazette 2012/48)**

(54) **VERFAHREN ZUR HERSTELLUNG VON SCHUTZKOLLOID-STABILISIERTEN POLYMERISATEN**

PROCESS FOR PRODUCING PROTECTIVE COLLOID-STABILIZED POLYMERS

PROCÉDÉ DE PRODUCTION DE POLYMÈRES STABILISÉS PAR DES COLLOÏDES PROTECTEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.05.2011 DE 102011076407**

(43) Veröffentlichungstag der Anmeldung:
**09.04.2014 Patentblatt 2014/15**

(73) Patentinhaber: **Wacker Chemie AG**
**81737 München (DE)**

(72) Erfinder:
• **FAATZ, Michael**
**84489 Burghausen (DE)**
• **HÄRZSCHEL, Reinhard**
**84489 Burghausen (DE)**

(74) Vertreter: **Ege, Markus et al**
**Wacker Chemie AG**
**Hanns-Seidel-Platz 4**
**DE-81737 München (DE)**

(56) Entgegenhaltungen:
**EP-A1- 1 110 979     DE-A1-102009 000 537**

## Beschreibung

Die vorliegende Erfindung betrifft Verfahren zur Herstellung von Schutzkolloid-stabilisierten Polymerisaten auf Basis von (Meth)acrylatmonomeren in Form deren wässrigen Dispersionen oder in Wasser redispergierbaren Polymerpulver, die so erhältlichen Verfahrensprodukte und deren Verwendung beispielsweise als Beschichtungs- oder Klebemittel im Baubereich.

Schutzkolloid-stabilisierte Polymerisate werden vor allem in Form deren wässriger Dispersionen oder in Wasser redispergierbarer Polymerpulver in vielerlei Anwendungen, beispielsweise im Baubereich als Beschichtungsmittel oder Klebemittel eingesetzt. Hierfür sind Polymerisate auf Basis von Vinylestern und Ethylen sehr geläufig. Als Schutzkolloide sind in der Praxis bisher vor allem teilverseifte Polyvinylalkohole verbreitet. Dagegen führen Polyvinylalkohole als Schutzkolloide für Acrylatpolymere bzw. Styrolacrylatcopolymere zumeist nicht zu hinreichend stabilen Polymerdispersionen. Es bereitet also Probleme, Acrylatdispersionen alleinig mit Polyvinylalkoholen so zu stabilisieren, dass die daraus resultierenden Dispersionen stabil und die Pulver zudem blockstabil sind (Polymerstabilität). In der Regel wird zur Erzielung einer handhabbaren Dispersionsviskosität zusätzlich Regler zur Herabsenkung des Molekulargewichtes eingesetzt, was wiederum die Blockstabilität der Pulver erheblich beeinträchtigt.

Ein weiteres Problem besteht darin, dass die Stabilisierung von dispergierten oder redispergierten Partikeln der Polymerisate durch teilverseifte Polyvinylalkohole in zementären Baustoffmassen im Laufe der Zeit nachlässt. Dies tritt insbesondere bei Acrylatpolymeren bzw. Styrolacrylatcopolymeren auf. Bei der Anwendung von Schutzkolloid-stabilisierten Polymerisaten zur Verbesserung der Eigenschaften von Baustoffmassen müssen die Rezepturen aber über eine gewisse Zeit stabil bleiben und dürfen ihre Verarbeitungskonsistenz nicht wesentlich verändern (Viskositäts- bzw. Zementstabilität). Andernfalls kann der Anwender aus den Baustoffmassen keine Bauwerke mit den geforderten anwendungstechnischen Eigenschaften, wie mechanischen Eigenschaften, herstellen, oder aber der Anwender müsste innerhalb kurzer Zeitspannen immer wieder neue Baustoffmassen herstellen, was in der Praxis einen inakzeptablen Aufwand darstellt.

Des Weiteren wurde beobachtet, dass bei Einsatz von mit teilverseiften Polyvinylalkoholen stabilisierten Polymerisaten in zementären Baustoffmassen die Stabilisierung von Luft im Laufe der Zeit nachlassen und deswegen Luft aus den zementären Baustoffmassen allmählich entweichen kann. Dieser Effekt wird auch als Gäreffekt bezeichnet und hat Einfluss auf den Luftporengehalt in den zementären Baustoffmassen bzw. den daraus hergestellten Bauwerken. Der Luftporengehalt und die damit zusammenhängende Porosität spielen aber eine wesentliche Rolle für die mechanischen Eigenschaften von Beton oder Mörtel, wie die beispielsweise die Druckfestigkeit. Sind zu viele Luftporen vorhanden, so sinkt die Druckfestigkeit stark ab, sind zu wenig oder keine Luftporen im Mörtel oder Beton vorhanden, ist der Baustoff nicht genügend Frost/Tau-stabil.

Bisher wurden schon eine Reihe von Ansätzen zur Herstellung von Schutzkolloid-stabilisierten Polymerisaten für bauchemische Anwendungen vorgestellt. So empfiehlt die EP-A 1065224 zur Herstellung von Poly(meth)acrylsäureestern eine Polymerisation in Gegenwart von teilverseiften Polyvinylalkoholen, wobei die Monomere und Initiatoren in bestimmter Weise auf die Vorlage und die Dosierung verteilt werden. Die EP-A 0477900 lehrt die Zugabe von vollverseiften 1-Alkylvinylester/Vinylester-Copolymeren nach der Polymerisation und vor der Trocknung zur Herstellung von in Wasser redispergierbaren Polymerpulvern. Die DE-A 1026074 befasst sich mit der Herstellung von verseiften 1-Alkylvinylester/Vinylester-Copolymeren und deren Verwendung als Schutzkolloid bei der Suspensions- oder Emulsionspolymerisation von ethylenisch ungesättigten Monomeren. Die EP-A 812863 beschreibt die Herstellung von Poly(meth)acrylsäureestern durch Polymerisation in Gegenwart von niedermolekularen Polyvinylalkoholen. Daraus erhältliche Polymerpulver neigen zum Verblocken. Der EP-A 0723975 sind Schutzkolloid-stabilisierte Polymerpulver auf Basis von Epoxy-Gruppen enthaltenden Polystyrolacrylaten entnehmbar. Die EP-A 2033991, EP-A 2075286, EP-A 2166028, EP-A 2189499, EP-A 2216348 wie auch die EP-A 1612226 lehren Glykol-Seitengruppen enthaltende Polyvinylalkohole als Schutzkolloide für wässrige Polymerdispersionen beziehungsweise in Wasser redispergierbare Polymerpulver.

Vor diesem Hintergrund bestand die Aufgabe, stabile Schutzkolloid-stabilisierte Dispersionen und entsprechende in Wasser redispergierbare Polymerpulver auf Basis von (Meth)Acrylsäureester-Monomeren zur Verfügung zu stellen, die beim Einsatz in zementären Anwendungen eine voll befriedigende Viskositäts- bzw. Zementstabilität besitzen und das Zementabbinden nicht behindern. Entsprechende zementäre Baustoffmassen sollten also hervorragende Verarbeitungseigenschaften haben und zu Bauwerken mit sehr guten mechanischen Eigenschaften, wie Haftzugfestigkeiten, führen.

Überraschenderweise wurde diese Aufgabe gelöst, indem Acrylsäureester bzw. Methacrylsäureester mittels Emulsionspolymerisation in Gegenwart eines vollverseiften 1-Alkylvinylester/Vinylester-Copolymers polymerisiert wurden. Dies war insofern besonders überraschend, da sich vollverseifte Polyvinylalkohole an sich im Allgemeinen nicht als Schutzkolloide zur Stabilisierung von Polymerdispersionen eignen. Auch vollverseifte 1-Alkylvinylester/Vinylester-Copolymere besitzen im Allgemeinen eine zu hohe Hydrophilie und damit verbunden eine zu geringe Lipophilie, als dass sie als Schutzkolloide für Poly(meth)acrylsäureester zu Dispersionen mit hinreichender Polymer- und Zementstabilität führen würden. Aussagen zu Vinylestern sind auf Grund von u.a. unterschiedlicher Hydrophilie nicht unmittelbar auf (Meth)acrylsäureester übertragbar. Auch sind Aussagen zu Schutzkolloiden für Suspensionspolymerisationsverfahren nicht auf Emulsionspolymerisationsverfahren übertragbar, da diese beiden Verfahren nach unterschiedlichen Mechanismen ablaufen und damit zusammenhängend Polymere mit ganz anderen Partikelgrößen hervorbringen, die wiederum unterschiedliche Anforderungen an die Schutzkolloide stellen. In Folge des erfindungsgemäßen Verfahrens werden aber Poly(meth)acrylsäureester zugänglich, die die erfindüngsgemäße Aufgabe lösen.

Gegenstand der Erfindung sind Verfahren zur Herstellung von mit Schutzkolloid-stabilisierten Polymerisaten auf Basis von (Meth)Acrylatsäureestern in Form deren wässrigen Dispersionen und in Wasser redispergierbaren Polymerpulver mittels radikalisch initiierter Emulsionspolymerisation von einem oder mehreren Monomeren aus der Gruppe der Ester der Acrylsäure oder Methacrylsäure, und gegebenenfalls einem oder mehreren weiteren damit copolymerisierbaren Monomeren, in Gegenwart von einem oder mehreren Schutzkolloiden, und gegebenenfalls Trocknung der damit erhaltenen wässrigen Dispersion, dadurch gekennzeichnet, dass
die Emulsionspolymerisation in Gegenwart von einem oder mehreren vollverseiften 1-Alkylvinylester/Vinylester-Copolymeren mit einem Hydrolysegrad von 96 bis 100 Mol% als Schutzkolloid durchgeführt wird und
die weiteren copolymerisierbaren Monomere ausgewählt werden aus der Gruppe bestehend aus Vinylester von unverzweigten oder verzweigten Carbonsäuren mit 1 bis 12 C-Atomen, Vinylaromaten, Vinylhalogenide, Ethylen, Propylen, Vinylaromaten und Vinylhalogenide.

Ein weiterer Gegenstand der Erfindung sind Schutzkolloid-stabilisierte Polymerisate auf Basis von (Meth)Acrylatsäureestern in Form deren wässrigen Dispersionen und in Wasser redispergierbaren Polymerpulver erhältlich mittels radikalisch initiierter Emulsionspolymerisation von einem oder mehreren Monomeren aus der Gruppe der Ester der Acrylsäure oder Methacrylsäure, und gegebenenfalls einem oder mehreren weiteren damit copolymerisierbaren Monomeren, in Gegenwart von einem oder mehreren Schutzkolloiden, und gegebenenfalls Trocknung der damit erhaltenen wässrigen Dispersion, dadurch gekennzeichnet, dass
die Emulsionspolymerisation in Gegenwart von einem oder mehreren vollverseiften 1-Alkylvinylester/Vinylester-Copolymeren mit einem Hydrolysegrad von 96 bis 100 Mol% als Schutzkolloid durchgeführt wird und
die weiteren copolymerisierbaren Monomere ausgewählt werden aus der Gruppe bestehend aus Vinylester von unverzweigten oder verzweigten Carbonsäuren mit 1 bis 12 C-Atomen, Vinylaromaten, Vinylhalogenide, Ethylen, Propylen, Vinylaromaten und Vinylhalogenide.

Geeignete Monomeren aus der Gruppe der Ester der Acrylsäure oder Methacrylsäure sind beispielsweise Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat. Besonders bevorzugt sind Methylacrylat, Methylmethacrylat, n-Butylacrylat und 2-Ethylhexylacrylat.

Der Anteil der Ester der Acrylsäure oder Methacrylsäure beträgt vorzugsweise 45 bis 100 Ges.-%, besonders bevorzugt 70 bis 100 Gew.-%, noch mehr bevorzugt 80 bis 100 Gew.-% und am meisten bevorzugt 90 bis 10,0 Gew.-%, wobei sich die Angaben in Gew.-% jeweils auf das Gesamtgewicht der insgesamt bei der Emulsionspolymerisation eingesetzten Monomere bezieht. Am allermeisten bevorzugt sind Polymerisate, die ausschließlich Ester der Acrylsäure oder Methacrylsäure als Monomer-Einheiten enthalten.

Gegebenenfalls können die Methacrylsäureester und Acrylsäureester noch mit einem oder mehreren weiteren Monomeren copolymerisiert werden aus der Gruppe umfassend Vinylester von unverzweigten oder verzweigten Carbonsäuren mit 1 bis 12 C-Atomen, Vinylaromaten, Vinylhalogenide, Olefine und Diene. Bevorzugte weitere Monomere sind Vinylaromaten, Vinylhalogenide, Olefine oder Diene.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9$^R$ oder VeoVa10$^R$ (Handelsnamen der Firma Shell). Besonders bevorzugt ist Vinylacetat. Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Der Anteil der weiteren Monomere beträgt vorzugsweise 0 bis 55 Gew.-%, besonders bevorzugt 0 bis 30 Gew.-%, noch mehr bevorzugt 0 bis 15 Gew.-% und am meisten bevorzugt 0 bis 5 Gew.-%, wobei sich die Angaben in Gew.-% jeweils auf das Gesamtgewicht der insgesamt bei der Emulsionspolymerisation eingesetzten Monomere bezieht.

Gegebenenfalls können noch 0,05 bis 10 Gew.-%, bezogen auf das Gesamtgewicht des Monomergemisches, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methy-

3

lolallylcarbamat, Alkylether wie der Isobutoxyether oder Ester des N-Methylolacrylamids, des NMethylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Am meisten bevorzugt werden Homo- und Copolymerisate, welche ein oder mehrere Monomere aus der Gruppe Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat enthalten, insbesondere Homopolymerisate von Methylacrylat, Methylmethacrylat, n-Butylacrylat oder 2-Ethylhexylacrylat oder Copolymerisate von Methylmethacrylat mit n-Butylacrylat und/oder 2-Ethylhexylacrylat; sowie Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; wobei die genannten Homo- und Copolymerisate gegebenenfalls noch die obengenannten Hilfsmonomere in den oben genannten Mengen enthalten können.

Unter den erfindungsgemäßen Verfahrensbedingungen können sich gepfropfte vollverseifte 1-Alkylvinylester/Vinylester-Copolymere bilden, in denen Polymere von einem oder mehreren der erfindungsgemäß eingesetzten Monomere, insbesondere einem oder mehreren Monomeren aus der Gruppe der Ester der Acrylsäure oder Methacrylsäure, auf vollverseifte 1-Alkylvinylester/Vinylester-Copolymere gepfropft sind. Derartige Pfropfungen wurden bei der erfindungsgemäßen Polymerisation von Methacrylsäureestern oder Acrylsäureestern beobachtet, nicht aber beispielsweise bei der entsprechenden Polymerisation von ausschließlich Vinylestern oder Styrol.

Der Pfropfungsgrad kann durch einen Pfropfungsparameter charakterisiert werden. Der Pfropfungsgrad wird bestimmt, indem eine mittels Emulsionspolymerisation hergestellte wässrige Dispersion in einer Schichtdicke von 100 $\mu$m auf einen Polyethylenterephthalat-Film (PET-Film) aufgetragen und anschließend während 24 Stunden bei 23°C und einer relativen Luftfeuchtigkeit von 50% sowie einem Druck von 1 atm getrocknet wird, wobei sich ein Film bildet. Exakt 1 g (= Gewicht a) dieses Films wird nacheinander für jeweils für 6 Stunden in 50°C heißes Methylacetat, dann in 98°C heißes Wasser, in 98°C heißes Toluol, in 98°C heißes Wasser und schließlich in 50°C heißes Methylethylketon eingetaucht und das Gewicht b des trockenen, verbliebenen Feststoffs bestimmt. Zusätzlich wird der flüchtige Anteil c des Films in % bestimmt. Der Pfropfungsgrad ergibt sich aus den so bestimmten Werten a, b und c nach folgender Formel (die Zeichen "x", "-" und "/" nehmen darin deren gängige Bedeutungen von Multiplizieren, Subtrahieren bzw. Dividieren an):

$$\text{Pfropfungsgrad (\%)} = [b / (a \times (100 - c) / 100)] \times 100$$

Der Propfungsparameter beträgt vorzugsweise 0 bis 30%, besonders bevorzugt 0,1 bis 30% und am meisten bevorzugt 0,1 bis 15%.

Die Schutzkolloid-stabilisierten Polymerisate haben mittlere Partikeldurchmesser Dw von vorzugsweise 300 nm bis 3 $\mu$m, besonders bevorzugt 500 nm bis 3 $\mu$m, ganz besonders bevorzugt 500 nm bis 1,5 $\mu$m und am meisten bevorzugt 700 nm bis 1,5 $\mu$m (bestimmt mit dem Messgerät Beckmann Coulter® LS nach ISO 13320).

Die Monomerauswahl bzw. die Auswahl der Gewichtsanteile der Comonomere erfolgt dabei so, dass im allgemeinen eine Glasübergangstemperatur Tg von -30°C bis +40C, vorzugsweise -25°C bis +30°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: $1/Tg = x_1/Tg_1 + x_2/Tg_2 + ... + x_n/Tg_n$, wobei $x_n$ für den Massebruch (Gew.-%/100) des Monomeren n steht, und $Tg_n$ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung erfolgt nach dem Emulsionspolymerisationsverfahren oder auch nach Miniemulsionspolymerisationsverfahren, wobei die Polymerisationstemperatur im Allgemeinen 40°C bis 100°C, vorzugsweise 60°C bis 90°C beträgt. Bei der Copolymerisation von gasförmigen Comonomeren wie Ethylen, 1,3-Butadien oder Vinylchlorid kann auch unter Druck, im Allgemeinen zwischen 5 bar und 100 bar, gearbeitet werden. Die im Folgenden für die Emulsionspolymerisation getroffenen Aussagen beziehen sich auch auf die Miniemulsionspolymerisationsverfahren.

Die Initiierung der Polymerisation erfolgt im Allgemeinen mit den für die Emulsionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im Allgemeinen in einer Menge von 0.001 bis 0.02 Gew.-%, vorzugsweise 0.001 bis 0.01 Gew.-%, jeweils bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, Tartrate und Ascorbinsäure. Die Reduktionsmittelmerige beträgt im allgemeinen 0.001 bis 0.03 Gew.-%, vorzugsweise 0.001 bis 0.015 Gew.-%, jeweils bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd. Vorzugsweise werden keine regelnden Substanzen verwendet.

Erfindungswesentlich ist, dass die Emulsionspolymerisation in Gegenwart von einem oder mehreren vollverseiften 1-Alkylvinylester/Vinylester-Copolymeren durchgeführt wird.

Vollverseifte 1-Alkylvinylester/Vinylester-Copolymere enthalten vorzugsweise 70 bis 95 Gew.-% Vinylalkoholeinheiten und 5 bis 30 Gew.-% und besonders bevorzugt 10 bis 20 Gew.-% 1-Alkylvinylalkohol-Einheiten mit C1- bis C4-Alkylgruppen. Die vollverseiften 1-Alkylvinylester/Vinylester-Copolymere enthalten vorzugsweise weniger als 2 Gew.-% und am meisten bevorzugt weniger als 1 Gew.-% an 1-Alkylvinylester- und Vinylester-Einheiten. Die Angaben in Ges.-% beziehen sich jeweils auf das Gesamtgewicht der vollverseiften 1-Alkylvinylester/Vinylester-Copolymere.

Als 1-Alkylvinylester-Einheiten sind 1-Methylvinylalkoholeinheiten besonders bevorzugt.

Der Hydrolysegrad der vollverseiften 1-Alkylvinylester/Vinylester-Copolymere beträgt 96 bis 100 Mol%, bevorzugt 98 bis 100 Mol% und am meisten bevorzugt 99 bis 100 Mol%.

Die Höppler-Viskosität der vollverseiften 1-Alkylvinylester/Vinylester-Copolymere beträgt vorzugsweise 2 bis 10 mPa.s und besonders bevorzugt 2 bis 4,0 mPa.s (bestimmt in 4 %-iger wässriger Lösung bei 20°C nach DIN 53015).

Vorzugsweise wird die Emulsionspolymerisation in Gegenwart von 4 bis 20 Gew.-% und besonders bevorzugt 6 bis 13 Gew.-% an vollverseiften 1-Alkylvinylester/Vinylester-Copolymeren durchgeführt, jeweils bezogen auf das Gesamtgewicht der insgesamt bei der Emulsionspolymerisation eingesetzten Monomeren.

Bezogen auf das Gesamtgewicht der insgesamt bei der Emulsionspolymerisation eingesetzten Schutzkolloide wird die Emulsionspolymerisation in Gegenwart von vorzugsweise 20 bis 100 Gew.-%, besonders bevorzugt 50 bis 100 Gew.-% und am meisten bevorzugt 80 bis 100 Gew.-% an vollverseiften 1-Alkylvinylester/Vinylester-Copolymeren durchgeführt. Am allermeisten bevorzugt werden bei der Emulsionspolymerisation ausschließlich vollverseifte 1-Alkylvinylester/Vinylester-Copolymeren eingesetzt.

Zugänglich sind die vollverseiften 1-Alkylvinylester/Vinylester-Copolymeren durch Copolymerisation von Vinylacetat mit einem oder mehreren 1-Alkylvinylestern, insbesondere Isopropenylacetat, und anschließender Verseifung. Die Herstellung ist in der DE-A 3724332 beschrieben.

Bei den erfindungsgemäßen Verfahren wird vorzugsweise ohne Zusatz von Emulgatoren polymerisiert. In Ausnahmefällen kann es von Vorteil sein noch zusätzlich kleine Mengen an Emulgatoren einzusetzen, gegebenenfalls 1 bis 5 Gew.-% bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Die Monomere können insgesamt vorgelegt oder insgesamt zudosiert werden oder in Anteilen vorgelegt werden und der verbleibende Rest an Monomeren nach der Initiierung der Polymerisation zudosiert werden. Die Dosierungen können separat (räumlich und zeitlich) durchgeführt werden oder die zu dosierenden Komponenten können alle oder teilweise voremulgiert dosiert werden.

Nach Abschluss der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem erfindungsgemäßen Verfahren erhältlichen wässrigen Dispersionen haben einen Feststoffgehalt von 30 bis 75 Gew.-%, vorzugsweise von 45 bis 60 Gew.-%.

Zur Herstellung der in Wasser redispergierbaren Polymerpulver werden die wässrigen Dispersionen, gegebenenfalls nach Zusatz von Schutzkolloiden als Trocknungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt.

In der Regel wird die Trocknungshilfe in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll mindestens 3 bis 3-0 Gew.-%, bezogen auf den Polymeranteil betragen; bevorzugt werden 5 bis 20 Gew.-% bezogen auf den Pölymeranteil eingesetzt.

Als Trocknungshilfen können beispielsweise vollverseifte 1-A1-kylvinylester/Vinylester-Copolymere, insbesondere die oben genannten vollverseifte 1-Alkylvinylester/Vinylester-Copolymere eingesetzt werden. Geeignete Verdüsungshilfen sind aber auch teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfönate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden keine weiteren Schutzkolloide als Polyvinylalkohole als Verdüsungshilfe eingesetzt.

Bei der Verdüsung hat sich vielfach ein Gehalt von bis zu 1,5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 $\mu$m.

Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 35 %, bevorzugt > 40 %.

Zur Verbesserung der anwendungstechnischen Eigenschaften können bei der Verdüsung weitere Zusätze zugegeben werden. Weitere, in bevorzugten Ausführungsformen enthaltene, Bestandteile von Polymerpulverzusammensetzungen sind beispielsweise Pigmente, Füllstoffe, Schaumstabilisatoren, Hydrophobierungsmittel.

Die wässrigen Polymerdispersionen und vorzugsweise die in Wasser redispergierbaren, schutzkolloidstabilisierten Polymerpulver können in den dafür typischen Anwendungsbereichen eingesetzt werden. Beispielsweise in bauchemischen Produkten in Verbindung mit hydraulisch abbindenden Bindemitteln wie Zementen (Portland-, Aluminat-, Trass-, Hütten-, Magnesia-, Phosphatzement), Gips, Wasserglas, für die Herstellung von Bauklebern, Putzen, Spachtelmassen, Fußbodenspachtelmassen, Dichtschlämmen, Fugenmörtel und Farben. Ferner als Alleinbindemittel für Beschichtungsmittel und Klebemittel oder als Beschichtungs- bzw. Bindemittel für Textilien und Papier.

Die erfindungsgemäß hergestellten Polymerisate sind insbesondere auch für hochbindemittelhaltige bauchemische Produkte geeignet. Bevorzugt enthalten die bauchemischen Produkte 0,5 bis 80 Gew.-%, besonders bevorzugt 2 bis 40 Gew.-% und am meisten bevorzugt 9 bis 40 Gew.-% Polymerisate in Form von wässrigen Dispersionen oder in Wasser redispergierbaren Polymerpulvern. Die Rezepturen enthalten vorzugsweise 2 bis 80 Gew.-%, besonders bevorzugt 2 bis 40 Gew.-% und am meisten bevorzugt 4 bis 35 Gew.-% hydraulisch abbindende Bindemittel, wie Zement, Gips oder deren Gemische; bevorzugt ist Zement als hydraulisch abbindendes Bindemittel. Weiterer Rezepturbestandteil sind 5 bis 80 Gew.-% anorganische Füllstoffe wie Sand, Quarzmehl, Kreide, Kalksteinmehl, Filterasche oder deren Gemische. Zur weiteren Verbesserung der Verlaufseigenschaften können der Trockenmischung gegebenenfalls noch verlaufsfördernde Zusätze wie Kasein oder Zementverflüssiger zugegeben werden. Die Angaben in Gew.-% beziehen sich auf die Trockenkomponenten und immer auf 100 Gew.-% Trockenmasse der Rezeptur für das jeweilige bauchemische Produkt. Das gebrauchsfertige bauchemische Produkt erhält man schließlich durch Beigeben von Wasser zur oben genannten Trockenmischung.

Besonders überraschen war, dass durch Einsatz von vollverseiften 1-Alkylvinylester/Vinylester-Copolymeren im erfindungsgemäßen Verfahren stabile Polymerdispersionen und stabile Polymerpulver sowie zudem stabile Polymermodifizierte zementäre Baustoffmassen zugänglich wurden. Denn vollverseifte Polyvinylalkohole sind naturgemäß sehr hydrophil und somit sehr gut wasserlöslich und damit generell als Schutzkolloide zur Stabilisierung von wässrigen Polymerdispersionen oder in Wasser redispergierbaren Polymerpulvern wenig geeignet. Diese Aussagen sind gerade für Poly(meth)acrylsäurepolymere in besonderem Maße zutreffend. Dennoch werden auf Grund des erfindungsgemäßen Emulsionspolymerisationsverfahrens sowohl stabile Polymerdispersionen, blockstabile Polymerpulver wie auch stabile Redispersionen der erfindungsgemäßen Polymerpulver erhalten. Die erfindungsgemäß hergestellten Polymerisate sind also dispersionsstabil und zudem zementstabil. Des Weiteren tritt in den bauchemischen Produkten, die die erfindungsgemäß stabilisierten Polymerisate enthalten, kein unerwünschter Gäreffekt auf. Auch zeigen die erfindungsgemäßen Baustoffmassen die gewünschten anwendungstechnischen Eigenschaften, wie offene Zeit, und die daraus hergestellten Bauwerke haben die geforderten mechanischen Eigenschaften, wie Haftzugfestigkeit.

Die nachfolgenden Beispiele dienen der weiteren Erläuterung der Erfindung:

In den Beispielen eingesetztes vollverseiftes 1-Alkylvinylester/Vinylester-Copolymer:

PME:

Vollverseiftes Copolymer aus Isopropenylacetat und Vinylacetat mit einem Verseifungsgrad von > 98% und einer Höppler-Viskosität von 2,3 mPas (bestimmt in 4 %-iger wässriger Lösung bei 20°C nach DIN 53015) und einem Isopropenylacetat-Anteil von 20 Mol%.

**Beispiel 1-:**

In einem Rührautoklaven (3L) wurden 491g entionisiertes Wasser, 360g einer wässrigen Lösung von PME (Festgehalt 26%) und 293g n-Butyläcrylat und 293g Methylmethacrylat unter Rühren vorgelegt. Die Vorlage wurde auf 60°C aufgeheizt, wobei beginnend bei einer Temperatur von 50°C 2,5ml einer 1. Gew.%-igen wässrigen Lösung Eisenammoniumsulfat und 54g einer 10 Gew.%-igen wässrigen Lösung Dinatriumtartrate während 5 min hinzugegeben wurden. Auf Temperierung bei 60°C wurden 211g einer 1 Vol.%-igen Wasserstoffperoxidlösung über einen Zeitraum von 300 min dosiert. 20 min nach Temperierung auf 60°C wurde eine Monomermischung bestehend aus 293g n-Butylacrylat und 293g Methylmethacrylat während 180 min zudosiert. Zusätzlich wurden 80 min nach Temperierung auf 60°C 90g einer wässrigen Lösung von PME (Festgehalt 26%) und 159g Wasser hinzudosiert. Nach Ende der Dosierung der Wasserstoffperoxidlösung wurde der Ansatz noch 60min bei 60°C gehalten. Die Nachpolymerisation erfolgte bei 45°C unter Zugabe von 10g tert.-Butylhydroperoxid (10 Gew.%ig) und 20g Brüggolit (10 Gew.%-ig).

Die erhaltene Dispersion wies einen Festgehalt von 51% auf und die Analyse der Teilchengrößenverteilung lieferte einen Teilchengrößendurchmesser Dw von 1$\mu$m (Coulter LS 13320). Der pH-Wert betrug 7,0 und die Viskosität 350 mPas (Bestimmung mit einem Brookfieldviskosimeter bei 23°C und 20 Upm mit der Spindel 2). Der Pfropfungsgrad betrug 7% (Bestimmung wie weiter oben in der Beschreibung angegeben).

**Beispiel 2:**

In einem Rührautoklaven (3L) wurden 373g entionisiertes Wasser, 352g einer wässrigen Lösung von PME (Festgehalt 26%)und 155g n-Butylacrylat und 155g Methylmethacrylat vorgelegt. Die Vorlage wurde auf 70°C aufgeheizt, wobei 3 ml einer 1 Gew.%-igen wässrigen Lösung Eisenammoniumsulfat hinzugegeben wurden. Auf Temperierung bei 70°C wurde mit der Dosierung einer 1 Gew.%-igen tert.-Butylhydroperoxidlösung sowie einer 1,5 Gew.%-igen Brüggolit-Lösung (Natriumhydroxymethansulfinat) begonnen, wobei folgende Dosiergeschwindigkeiten nacheinander zum Einsatz kamen: 15 min jeweils mit einer Dosiergeschwindigkeit von 12 g/h, anschließend 165 min jeweils mit einer Dosiergeschwindigkeit von 3g/h, 180 min jeweils mit einer Dosiergeschwindigkeit von 10 g/h und schließlich wurde die Dosiergeschwindigkeit innerhalb von 60 min auf 20 g/h gesteigert und für 60 min bei dieser Dosiergeschwindigkeit fortgesetzt. 5 min nach der Temperierung auf 70°C wurde mit der Dosierung von 302g n-Butylacrylat und 302g Methylmethacrylat begonnen und während 210 min gleichmäßig zudosiert. 30 min nach Ende der Dosierung der Butylhydroperoxidlösung und der Brüggolit-Lösung wurde auf Raumtemperatur abgekühlt. Die Nachpolymerisation erfolgte bei 45°C mit 6g tert.-Butylhydroperoxid (10%ig) und 12g Brüggolit (10%ig).

Die erhaltene Dispersion hatte einen Festgehalt von 53% und Teilchengrößendurchmesser Dw von 1,2$\mu$m (Coulter LS 13320). Der pH-Wert betrug 4,3 und die Viskosität 73 mPas (Bestimmung mit einem Brookfieldviskosimeter bei 23°C und 20 Upm mit der Spindel 2). Der Pfropfungsgrad betrug 7% (Bestimmung wie weiter oben in der Beschreibung angegeben).

**Vergleiahabeispiel 3:**

In einem Rührautoklavan (3L) wurden 298g entionisiertes Wasser, 465g einer 20 Gew.-%-igen wässrigen Lösung eines teilverseiften Polyvinylalkohols (Hydrolysegrad 88%, Viskosität nach Höppler von 4mPas) sowie 155g n-Butylacrylat und 155g Methylmethacrylat vorgelegt. Die Vorlage wurde auf 70°C aufgeheizt und währenddessen wurden 3 ml einer 1 Gew.%-igen wässrigen Lösung Eisenammoniumsulfat hinzugegeben. Auf Temperierung bei 70°C wurde mit der Dosierung einer 1 Gew.%-igen tert.-Hutylhydroporoxidlösung und einer 1,5 Gew.%-igen Brüggolit-Lösung (Natriumhydroxymethansulfinat) begonnen, wobei folgende Dosiergeschwindigkeiten nacheinander zum Einsatz kamen: 15 min jeweils mit einer Dosiergeschwindigkeit von 12 g/h, anschließend 165 min jeweils mit einer Dosiergeschwindigkeit von 3g/h, 180 min jeweils mit einer Dosiergeschwindigkeit von 10 g/h und schließlich wurde die Dosiergeschwindigkeit innerhalb von innerhalb 60 min auf 20 g/h gesteigert und für weitere 60 min bei dieser Dosierteschwindigkeit fortgesetzt. 5 min nach Temperierung auf 70°C wurden 302g n-Butylacrylat und 302g Methylmethacrylat während 210 min gleichmäßig zudosiert, 30 min nach Ende der Dosierung der Butylhydroperoxidlösung und der Brüggolit-Lösung wurde der Ansatz abgekühlt. Die Nachpolymerisation erfolgte bei 45°C mit 6g tert.- Butylhydroperoxid (10%ig) und 12g Brüggolit (10%ig). Die erhaltene Dispersion hatte einen Festgehalt von 53% und einen Teilchengrößendurchmesser Dw von $0,6\mu m$ (Coulter LS 13320). Der pH-Wert betrug 3,2 und die Viskosität 926 mPas (Bestimmung mit einem Brookfieldviskosimeter bei 23°C und 20 Upm mit der Spindel 2).

**Beispiel 4)**

400 Gew.-Teile der Dispersion aus Beispiel 1 wurden mit 60 Gew.-Teilen einer wässrigen Lösung von PME (Festgehalt 20%) und 20 Gewichtsteilen eines teilverseiften Polyvinylalkohols (Festgehalt 10%) 0,4 Gew.-Teilen Entschäumer und 75 Gew.-Teilen Wasser versetzt und gründlich gemischt. Die Dispersion wurde durch eine Zweistoffdüse versprüht. Als Verdüsungskomponente diente 4 bar Druckluft, die gebildeten Tropfen wurden mit auf 125°C erhitzter Luft im Gleichstrom getrocknet, Das erhaltene trockene Polymerpulver wurde mit 12 Gew.-% handelsüblichem Antiblockmittel (Gemisch aus Calcium-Carbonat und Kaolin) versetzt.

**Anwendungstechnische Prüfung:**

Die Austestung der Stabilität der Polymerdispersion in zementären Baustoffmassen erfolgte an Hand der Rezeptur gemäß Tabelle 1.

**Tabelle 1**: Rezeptur der Baustoffmasse:

| Menge | Rohstoffe |
|---|---|
| 82,5 g | Portlandzement |
| 75 g | Calcit ($CaCO_3$) (10-40 mm) |
| 142 g | Quarzsand (200-500 mm) |
| 14, 5 g | Polymerdispersion$^{X}$) |
| 85 g | Wasser |
| x) Die eingesetzte Menge bezieht sich auf die Trockenmasse der jeweiligen Dispersion. ||

Die Bestandteile der Rezeptur gemäß Tabelle 1 wurden zusammengegeben und während einer Minute mit dem Dissolver bei 1000 Upm gleichmäßig durchmischt. Danach ließ man die Mischung eine Minute ruhen. Anschließend wurde mit einem Ankerrührer 15 Sekunden bei 150 Upm aufgerührt. Danach wurde sofort mit dem Viscotester VT 181 mit T Spindel Messsystem auf Stufe 1 für 15 Sekunden gemessen. Der abgelesene Skalenwert am Viscotester wurde als Startwert auf 100% definiert. Der nach 1h gemessene Skalenwert wurde in Relation zum Startwert angegeben. Die Ergebnisse der Messung der so bestimmten Zementverträglichkeit sind in Tabelle 2 eingetragen.

**Tabelle 2:** Zementverträglichkeit von Polymerdispersionen in Baustoffmassen gemäß Tabelle 1:

| Polymerdispersion | Zementstabilität |
|---|---|
| Beispiel 1 | 120% |
| Beispiel 2 | 135% |
| Vergleichsbeispiel 3 | 200% |

Die Polymerdispersion des Vergleichsbeispiels 3 ergab bei der Austestung eine Viskositätssteigerung von 200% und ist somit bei weitem nicht zementstabil. Die erfindungsgemäßen Beispiele zeichnen sich dagegen durch eine sehr gute Zementstabilität aus.

Polymerpulver wurden in der Fliesenkleberformulierung gemäß Tabelle 3 ausgetestet.

## EP 2 714 751 B1

**Tabelle 3:** Fliesenkleberformulierung:

| Menge | Rohstoffe |
|---|---|
| 300 | Portland CEM I / Milke 52,5 |
| 5 | Kalkhydrat |
| 6 | Calciumformiat |
| 583 | Quarz |
| 3 | Schichtsilikat |
| 3 | Cellulosefaser |
| 100 | Polymerpulver |

Es wurden die offene Zeit nach EN 1346 und die Haftzugprüfung nach EN 1348 bestimmt. Die Ergebnisse sind in Tabelle 4 eingetragen. Das erfindungsgemäße Pulver zeichnet sich durch eine hervorragende Verarbeitung mit sehr langer Topfzeit aus. Dazu kommen eine sehr lange offene Zeit und verbesserte Haftzugfestigkeiten nach Wasser- und Wärmelagerung.

**Tabelle 4**: Austestungsergebnisse von Polymerpulvern in Fliesenkleberformulierungen gemäß Tabelle 3:

| Polymerpulver | Offene Zeit nach 30 min [N/mm$^2$] | Haftzugfestigkeit | |
|---|---|---|---|
| | | Wasserlagerung B [N/mm$^2$] | Wärmelagerung C [N/mm$^2$] |
| VAC/E[a] | 1,3 | 0,7 | 2,5 |
| ST/BA[a] | 0,5 | 1,1 | 2,2 |
| MMA/BA/St[a] | 0,6 | 1,0 | 2,4 |
| Beispiel 4 | 2,2 | 1,5 | 3,1 |
| a): In Wasser redispergierbare Polymerpulver, die ausschließlich mit teilverseiftem Polyvinylalkohol stabilisiert sind: VAC/E: Polymerpulver basiert auf Vinylacetat und Ethylen; ST/BA: Polymerpulver basiert auf Styrol und Butylacrylat; MMA/BA/St: Polymerpulver basiert auf Methylmethacrylat, Butylacrylat und Styrol. | | | |

## Patentansprüche

**1.** Verfahren zur Herstellung von mit Schutzkolloid-stabilisierten Polymerisaten auf Basis von (Math)Acrylatsäureestern in Form deren wässrigen Dispersionen und in Wasser redispergierbaren Polymerpulver mittels radikalisch initiinerter Emulsionspolymerisation von einem oder mehreren Monomeren aus der Gruppe der Ester der Acrylsäure oder Metthacrylsäure und gegebenenfalls einem oder mehreren weiteren damit copolymerisierbaren Monomeren, in Gegenwart von einem oder mehreren Schutzkolloiden, und gegebenenfalls Trocknung der damit erhaltenen wässrigen Dispersion, **dadurch gekennzeichnet, dass**
die Emulsionspolymerisation in Gegenwart von einem oder mehreren vollverseiften 1-Alkylvinylester/Vinylester-Copolymeren mit einem Hydrolysegrad von 96 bis 100 Mol% als Schutzkolloid durchgeführt wird und
die weiteren copolymerisierbaren Monomere ausgewählt werden aus der Gruppe bestehend aus Vinylester von unsverzweigten oder verzweigten Carbonsäuren mit 1 bis 12 C-Atomen, Vinylaromaten, Vinylhalogenide, Ethylen und Propylen.

**2.** Verfahren zur Herstellung von mit Schutzkolloid-stabilisierten Polymerisaten nach Anspruch 1, **dadurch gekennzeichnet, dass** ein oder mehrere Ester der Acrylsäure oder Methacrylsäure ausgewählt werden aus der Gruppe umfassend Methylacrylat, Methylmethacrylat, Ethylacrylat, Ethylmethacrylat, Propylacrylat, Propylmethacrylat, n-Butylacrylat, n-Butylmethacrylät und 2-Ethylhexylacrylat.

**3.** Verfahren zur Herstellung von mit Schutzkolloid-stabilisorten Polymerisaten nach Anspruch 1 oder 2, **dadurch gekennzeichnet, dass** der Anteil der Ester der Acrylsäure oder Methacrylsäure 45 bis 100 Gew.-% beträgt, bezogen auf das Gesamtgewicht der insgesamt bei der Emulsionspolymerisation eingesetzten Monomere.

4. Verfahren zur Herstellung von mit Schutzkolloid-stabilisierten Polymerisaten nach Anspruch 1 bis 3, **dadurch gekennzeichnet, dass** die vollverseiften 1-Alkylvinylester/Vinylester-Copolymere 70 bis 95 Gew.-% Vinylalkoholeinheiten und 5 bis 30 Gew.-% 1-Alkylvinylalkohol-Einheiten mit C1- bis C4-Alkylgruppen enthalten.

5. Verfahren zur Herstellung von mit Schutzkolloid-stabilisierten Polymerisaten nach Anspruch 1 bis 4, **dadurch gekennzeichnet, dass** die vollverseiften 1-Alkylvinylester/Vinylester-Copolymere weniger als 2 Gew.-% an 1-A1-kylvinylester- und Vinylester-Einheiten enthalten, bezogen auf das Gesamtgewicht der vollverseiften 1-Alkylvinylester/Vinylester-Copolymere,

6. Verfahren zur Herstellung von mit Schutzkolloid-stabilisierten Polymerisaten nach Anspruch 1 bis 5, **dadurch gekennzeichnet, dass** der Hydrolysegrad der vollverseiften 1-Alkylvinylester/Vinylester-Copolymere 98 bis 100 Mol% beträgt.

7. Verfahren zur Herstellung von mit Schutzkolloid-stabilisierten Polymerisaten nach Anspruch 1 bis 6, **dadurch gekennzeichnet, dass** die Höppler-Viakosität der vollverseiften 1-Alkylvinylester/Vinylester-Copolymere 2 bis 10 mPa.s beträgt (bestimmt in 4 %-iger wässriger Lösung bei 20°C nach DIN 53015).

8. Verfahren zur Herstellung von mit Schutzkolloid-stabilisierten Polymerisaten nach Anspruch 1 bis 7, **dadurch gekennzeichnet, dass** die Emulsionspolymerisation in Gegenwart von 4 bis 20 Gew.-% an vollverseiften 1-Alkylvinylester/Vinylester-Copolymeren durchgeführt wird, bezogen auf das Gesamtgewicht der insgesamt bei der Emulsionspolymerisation eingesetzten Monomere.

9. Verfahren zur Herstellung von mit Schutzkolloid-stabilisierten Polymerisaten nach Anspruch 1 bis 8, **dadurch gekennzeichnet, dass** die Emulsionspolymerisation in Gegenwart von 20 bis 100 Gew.-% an vollverseiften 1-Alkylvinylester/Vinylester-Copolymeren durchgeführt wird, bezogen auf das Gesamtgewicht der insgesamt bei der Emulsionspolymerisatibn eingesetzten Schutzkolloide.

10. Schutzkolloid-stabilisierte Polymerisate auf Basis von (Meth)Acrylatsäureestern in Form deren wässrigen Dispersionen und in Wasser redispergierbaren Polymerpulver erhältlich nach den Verfahren der Ansprüche 1 bis 9.

11. Schutzkolloid-stabilisierte Polymerisate gemäß Anspruch 10, **dadurch gekennzeichnet, dass** die Schutzkolloid-stabilisierten Polymerisate vollverseifte 1-Alkylvinylester/Vinylester-Copolymere mit einem Propfungsparameter von 0 bis 30% enthalten.

12. Verwendung der Verfahrensprodukte aus den Ansprüchen 1 bis 9 in bauchemischen Produkten in Verbindung mit hydraulisch abbindenden Bindemitteln, wie Zementen, Gips oder Wasserglas, für die Herstellung von Baukleber, Putzen, Spachtelmassen, Fußbodenspachtelmassen, Dichtsahlämmen, Fugenmörtel oder Farben.

13. Verwendung der Verfahrensprodukte aus den Ansprüchen 1 bis 9 als Alleinbindemittel für Beschichtungsmittel oder Klebemittel oder als Beachichtungs- bzw. Bindemittel für Textilien öder Papier.

**Claims**

1. Process for preparing protective colloid-stabilized polymers based on (meth)acrylic esters in the form of their aqueous dispersions and polymer powders redispersible in water, by means of radically initiated emulsion polymerization of one or more monomers from the group of the esters of acrylic acid or methacrylic acid and optionally one or more further monomers copolymerizable therewith, in the presence of one or more protective colloids, and optionally drying of the aqueous dispersion obtained thereby, **characterized in that**
the emulsion polymerization is carried out in the presence of one or more fully hydrolyzed 1-alkylvinyl ester/vinyl ester copolymers having a degree of hydrolysis of 96 to 100 mol% as protective colloid, and
the further copolymerizable monomers are selected from the group consisting of vinyl esters of unbranched or branched carboxylic acids having 1 to 12 C atoms, vinyl aromatics, vinyl halides, ethylene and propylene.

2. Process for preparing protective colloid-stabilized polymers according to Claim 1, **characterized in that** one or more esters of acrylic acid or methacrylic acid are selected from the group encompassing methyl acrylate, methyl methacrylate, ethyl acrylate, ethyl methacrylate, propyl acrylate, propyl methacrylate, n-butyl acrylate, n-butyl methacrylate, and 2-ethylhexyl acrylate.

3. Process for preparing protective colloid-stabilized polymers according to Claim 1 or 2, **characterized in that** the fraction of the esters of acrylic acid or methacrylic acid is 45 to 100 wt%, based on the total weight of the monomers used overall in the emulsion polymerization.

4. Process for preparing protective colloid-stabilized polymers according to Claim 1 to 3, **characterized in that** the fully hydrolyzed 1-alkylvinyl ester/vinyl ester copolymers contain 70 to 95 wt% of vinyl alcohol units and 5 to 30 wt% of 1-alkylvinyl alcohol units with C1 to C4 alkyl groups.

5. Process for preparing protective colloid-stabilized polymers according to Claim 1 to 4, **characterized in that** the fully hydrolyzed 1-alkylvinyl ester/vinyl ester copolymers contain less than 2 wt% of 1-alkylvinyl ester units and vinyl ester units, based on the total weight of the fully hydrolyzed 1-alkylvinyl ester/vinyl ester copolymers.

6. Process for preparing protective colloid-stabilized polymers according to Claim 1 to 5, **characterized in that** the degree of hydrolysis of the fully hydrolyzed 1-alkylvinyl ester/vinyl ester copolymers is 98 to 100 mol%.

7. Process for preparing protective colloid-stabilized polymers according to Claim 1 to 6, **characterized in that** the Höppler viscosity of the fully hydrolyzed 1-alkylvinyl ester/vinyl ester copolymers is 2 to 10 mPa.s (determined in 4% strength aqueous solution at 20°C in accordance with DIN 53015).

8. Process for preparing protective colloid-stabilized polymers according to Claim 1 to 7, **characterized in that** the emulsion polymerization is carried out in the presence of 4 to 20 wt% of fully hydrolyzed 1-alkylvinyl ester/vinyl ester copolymers, based on the total weight of the monomers used overall in the emulsion polymerization.

9. Process for preparing protective colloid-stabilized polymers according to Claim 1 to 8, **characterized in that** the emulsion polymerization is carried out in the presence of 20 to 100 wt% of fully hydrolyzed 1-alkylvinyl ester/vinyl ester copolymers, based on the total weight of the protective colloids used overall in the emulsion polymerization.

10. Protective colloid-stabilized polymers based on (meth)acrylic esters in the form of their aqueous dispersions and polymer powders redispersible in water, obtainable by the processes of Claims 1 to 9.

11. Protective colloid-stabilized polymers according to Claim 10, **characterized in that** the protective colloid-stabilized polymers comprise fully hydrolyzed 1-alkylvinyl ester/vinyl ester copolymers with a grafting parameter of 0 to 30%.

12. Use of the process products from Claims 1 to 9 in chemical construction products in conjunction with hydraulically setting binders, such as cements, gypsum, or waterglass, for producing building adhesives, renders, filling compounds, flooring compounds, sealing slurries, jointing mortars, or paints.

13. Use of the process products from Claims 1 to 9 as sole binders for coating materials or adhesive-bonding materials, or as coating or binder materials for textiles or paper.

**Revendications**

1. Procédé pour la production de polymères stabilisés par des colloïdes protecteurs, à base d'esters d'acide (méth)acrylique, sous forme de leurs dispersions aqueuses et poudres de polymère redispersables dans l'eau, par polymérisation en émulsion à amorçage radicalaire d'un ou de plusieurs monomères choisis dans le groupe des esters de l'acide acrylique ou de l'acide méthacrylique et éventuellement d'un ou de plusieurs autres monomères copolymérisables avec ceux-ci, en présence d'un ou de plusieurs colloïdes protecteurs, et éventuellement séchage de la dispersion aqueuse ainsi obtenue,
**caractérisé en ce**
**qu'**on effectue la polymérisation en émulsion en présence d'un ou de plusieurs copolymères ester 1-alkylvinylique/ester vinylique totalement saponifiés ayant un degré d'hydrolyse de 96 à 100 % en moles, en tant que colloïde(s) protecteur(s), et
les autres monomères copolymérisables sont choisis dans le groupe constitué par des esters vinyliques d'acides carboxyliques ramifiés ou non ramifiés ayant de 1 à 12 atomes de carbone, des composés vinylaromatiques, des halogénures de vinyle, l'éthylène et le propylène.

2. Procédé pour la production de polymères stabilisés par des colloïdes protecteurs selon la revendication 1, **carac-**

**térisé en ce qu'**un ou plusieurs esters de l'acide acrylique ou de l'acide méthacrylique sont choisis dans le groupe comprenant l'acrylate de méthyle, le méthacrylate de méthyle, l'acrylate d'éthyle, le méthacrylate d'éthyle, l'acrylate de propyle, le méthacrylate de propyle, l'acrylate de n-butyle, le méthacrylate de n-butyle et l'acrylate de 2-éthylhexyle.

3. Procédé pour la production de polymères stabilisés par des colloïdes protecteurs selon la revendication 1 ou 2, **caractérisé en ce que** la proportion des esters de l'acide acrylique ou de l'ester méthacrylique vaut de 45 à 100 % en poids, par rapport au poids total des monomères utilisés au total dans la polymérisation en émulsion.

4. Procédé pour la production de polymères stabilisés par des colloïdes protecteurs selon l'une quelconque des revendications 1 à 3, **caractérisé en ce que** les copolymères ester 1-alkylvinylique/ester vinylique totalement saponifiés contiennent 70 à 95 % en poids de motifs alcool vinylique et 5 à 30 % en poids de motifs alcool 1-alkylvinylique à groupes alkyle en $C_1$-$C_4$.

5. Procédé pour la production de polymères stabilisés par des colloïdes protecteurs selon l'une quelconque des revendications 1 à 4, **caractérisé en ce que** les copolymères ester 1-alkylvinylique/ester vinylique totalement saponifiés contiennent moins de 2 % en poids de motifs ester 1-alkylvinylique et ester vinylique, par rapport au poids total des copolymères ester 1-alkylvinylique/ester vinylique totalement saponifiés.

6. Procédé pour la production de polymères stabilisés par des colloïdes protecteurs selon l'une quelconque des revendications 1 à 5, **caractérisé en ce que** le degré d'hydrolyse des copolymères ester 1-alkylvinylique/ester vinylique totalement saponifiés vaut de 98 à 100 % en moles.

7. Procédé pour la production de polymères stabilisés par des colloïdes protecteurs selon l'une quelconque des revendications 1 à 6, **caractérisé en ce que** la viscosité Höppler des copolymères ester 1-alkylvinylique/ester vinylique totalement saponifiés vaut de 2 à 10 mPa.s (déterminée en solution aqueuse à 4 % à 20 °C selon DIN 53015).

8. Procédé pour la production de polymères stabilisés par des colloïdes protecteurs selon l'une quelconque des revendications 1 à 7, **caractérisé en ce que** la polymérisation en émulsion est effectuée en présence de 4 à 20 % en poids de copolymères ester 1-alkylvinylique/ester vinylique totalement saponifiés, par rapport au poids total des monomères utilisés au total dans la polymérisation en émulsion.

9. Procédé pour la production de polymères stabilisés par des colloïdes protecteurs selon l'une quelconque des revendications 1 à 8, **caractérisé en ce que** la polymérisation en émulsion est effectuée en présence de 20 à 100 % en poids de copolymères ester 1-alkylvinylique/ester vinylique totalement saponifiés, par rapport au poids total des colloïdes protecteurs utilisés au total dans la polymérisation en émulsion.

10. Polymères stabilisés par des colloïdes protecteurs, à base d'esters d'acide (méth)acrylique, sous forme de leurs dispersions aqueuses et poudres de polymère redispersables dans l'eau, pouvant être obtenus selon les procédés des revendications 1 à 9.

11. Polymères stabilisés par des colloïdes protecteurs selon la revendication 10, **caractérisés en ce que** les polymères stabilisés par des colloïdes protecteurs contiennent des copolymères ester 1-alkylvinylique/ester vinylique totalement saponifiés ayant un paramètre de greffage de 0 à 30 %.

12. Utilisation des produits des procédés des revendications 1 à 9, dans des produits chimiques pour le bâtiment, en conjonction avec des liants à prise hydraulique, tels que des ciments, le plâtre ou un orthosilicate, pour la production de colles pour le bâtiment, d'enduits, de mastics, de produits de ragréage de sols, de matières d'étanchéité, de mortiers à joints ou de peintures.

13. Utilisation des produits des procédés des revendications 1 à 9, en tant que liant unique pour des produits de revêtement ou colles ou en tant que produit de revêtement ou liant pour textiles ou papier.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1065224 A
- EP 0477900 A
- DE 1026074 A
- EP 812863 A
- EP 0723975 A
- EP 2033991 A
- EP 2075286 A
- EP 2166028 A
- EP 2189499 A
- EP 2216348 A
- EP 1612226 A
- DE 3724332 A

**In der Beschreibung aufgeführte Nicht-Patentliteratur**

- **NACH FOX T. G.** *Bull. Am. Physics Soc.,* 1956, vol. 1 (3), 123
- Polymer Handbook. J. Wiley & Sons, 1975